# EUROPÄISCHE PATENTSCHRIFT

(11) **EP 1 798 472 B1**
(45) Veröffentlichungstag und Bekanntmachung des Hinweises auf die Patenterteilung: **25.05.2011**
(21) Anmeldenummer: 06025852.2
(22) Anmeldetag: 13.12.2006
(51) Int. Cl.: F23M 5/08, F23R 3/00

(54) **Gasturbinenbrennkammer**
Gas turbine combustion chamber
Chambre de combustion de turbine à gaz

(30) Priorität: 19.12.2005 DE 102005060704
(43) Veröffentlichungstag der Anmeldung: 20.06.2007
(73) Patentinhaber: Rolls-Royce Deutschland Ltd & Co KG, 15827 Blankenfelde-Mahlow (DE)
(72) Erfinder: v.d. Bank, Ralf Sebastian, 15834 Rangsdorf (DE)
(74) Vertreter: Weber, Joachim

(56) Entgegenhaltungen:
- EP-A- 0 725 253
- EP-B- 0 020 594
- WO-A-01/31181
- DE-A1- 3 511 740
- DE-C- 510 847
- FR-A- 980 028
- GB-A- 736 759
- US-A- 1 935 659
- US-A- 2 569 446
- US-A- 3 355 883

## Beschreibung

Die Erfindung bezieht sich auf eine Gasturbinenbrennkammer, insbesondere für eine Fluggasturbine oder eine stationäre Gasturbine. Beim Stand der Technik ist es bekannt, Luft, die vom Kompressor gefördert wird, zur Kühlung der Brennkammerwandung zu verwenden. Ohne Kühlung würde die Brennkammerwandung bis zu 2.600 K heiß werden. Es ist verständlich, dass keine Werkstoffe zur Verfügung stehen, um derartigen Temperaturen ohne Kühlung zu widerstehen.

Als nachteilig erweist es sich, dass ein relativ großer Teil der Verbrennungsluft (zwischen 30 und 50% der Gesamtverbrennungsluft) für die Brennkammerkühlung verwendet werden muss.

Bei sehr fortschrittlichen einfach-annularen Brennkammern mit Magervormischbrennern wird heute davon ausgegangen, dass 60 bis 70% der Verbrennungsluft (W30) für die Vormischung in den Magervormischbrennern zur Verfügung steht, um die NOx-Luftschadstoffemissionen zu mindern.

In Zukunft werden die Turbofan-Triebwerke gegenüber dem heutigen Stand der Technik deutlich höhere thermische Wirkungsgrade und einen besseren Vortriebswirkungsgrad bekommen.

Beide Maßnahmen führen dazu, dass das Kerntriebwerk bei höheren Brennkammertemperaturen (Eingang und Austritt) und bei einem niedrigeren Gesamtluftbrennstoff-Verhältnis, d.h. fetter, betrieben werden muss.

Deshalb wird bei den zukünftigen Brennkammern, bei angenommener konstanter Kühllufteffizienz, weniger Luft zur Vormischung zur Verbrennung stehen und die NOx-Luftschadstoffemissionen werden infolge der höheren Verbrennungstemperaturen unausweichlich ansteigen.

Bei konventionellen Triebwerken ist es somit lediglich möglich, ausreichend Verbrennungsluft zur Verfügung zu stellen, um durch Abmagern der Vormischung, entsprechend reduzierte Verbrennungstemperaturen zu erreichen. Eine Steigerung der Effizienz der Luftkühlverfahren ist dabei nur noch bedingt möglich: Es wird nicht erwartet, dass der Kühlluftanteil auf deutlich unter 30% gesenkt werden kann.

Die den nächstkommenden Stand der Technik bildende FR 980 028 A beschreibt eine Gasturbinenbrennkammer, deren Wandung mit einer Fluid-Kühlung versehen ist. Hierzu ist die Wandung aus dichten Rohren aufgebaut.

Eine weitere Gasturbinenbrennkammer zeigt die EP-A-0 725 253. Bei dieser ist eine Fluid-Kühlung vorgesehen, welche Brennstoff als Kühlmedium verwendet, welches aus einem Flugzeugtank zugeführt und in diesen zurückgeleitet wird.

Die DE 35 11 740 A1 beschreibt eine Brennkammer einer Gasturbine, bei welcher durch eine Wärmetauscher-Verrohrung Fluid durchgeleitet wird. Es sind zwei Fluid-Systeme vorgesehen. Die Innenseite der Brennkammerwandung kann mit einer Isolierbeschichtung versehen sein.

Die WO 01/31181 A beschreibt ein weiteres Gasturbinen-Kühlsystem mit einem geschlossenen Kühlkreislauf, wobei hinter dem Kompressor der Gasturbine ein rekuperativer Wärmetauscher vorgesehen ist.

Eine weitere Gasturbinenbrennkammer offenbart die EP-B-0 020 594. Dabei sind in der Wandung der Brennkammer Kühlrohre vorgesehen.

Bei konventionellen Triebwerken ist es somit lediglich möglich, ausreichend Verbrennungsluft zur Verfügung zu stellen, um durch Abmagern der Vormischung entsprechend reduzierte Verbrennungstemperaturen zu erreichen. Eine Steigerung der Effizienz der Luftkühlverfahren ist dabei nur noch bedingt möglich. Es wird nicht erwartet, dass der Kühlluftanteil auf deutlich unter 30% gesenkt werden kann.

Der Erfindung liegt die Aufgabe zugrunde, eine Gasturbinenbrennkammer der eingangs genannten Art zu schaffen, welche bei einfachem Aufbau und einfacher, kostengünstiger Herstellbarkeit effizient ohne Kühlluft gekühlt werden kann.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit eine gasdichte, berohrte Brennkammerwandung, bevorzugterweise aus Rippenrohren vorgesehen, die durch eine Kühlflüssigkeit in einem bevorzugterweise geschlossenen Kühlkreislauf durchströmt wird. Bei der Flüssigkeit kann es sich um einen Stoff handeln, der bei atmosphärischen Normalbedingungen gasförmig oder flüssig ist.

Die Brennkammerberohrung aus Rippenrohren kann derart ausgeführt werden, dass sich auf der Flammenseite eine glatte oder wellige Oberfläche ergibt.

Auf der Kühlmittelseite können die Rohre Einbauten und Auskantungen besitzen, um den Wärmeübergang von der Rohrinnenseite zur Kühlflüssigkeit zu erhöhen.

Die Kühlflüssigkeit nimmt während der Durchströmung der Brennkammerberohrung in erheblicher Menge Wärmeenergie auf. Diese muss entsorgt werden, will man einen geschlossenen Kühlkreislauf erhalten.

Dazu sind zwei Möglichkeiten vorgesehen:
1.) Man akzeptiert, so wie dies in der Erfindung beschrieben ist, eine Minimaltemperatur des Kühlkreislaufes, die der des Kompressoraustritts entspricht. In diesem Fall wird direkt hinter dem Kompressor ein rekuperativer Wärmetauscher eingebaut, durch den die in der Brennkammerberohrung aufgenommene Wärmeenergie an die Verbrennungsluft, die aus dem Kompressor austritt, übertragen wird.
2.) Man verwendet den Kühlkreislauf, um eine kleine Turbine anzutreiben, die die Energie zur Verfügung stellt, a) um die Pumpe(n) zur Aufrechterhaltung der Zirkulation anzutreiben und b) einen Generator antreibt, um den Bedarf an elektrischer Leistung der Bordsysteme zu decken, so wie dies nicht von der Erfindung beansprucht wird.
   In diesem Fall verwendet man im Prinzip einen zwangsumlaufenden Kühlkreislauf aus der Kraftwerkstechnik. Die umlaufende Flüssigkeit wird in der kleinen Turbine kondensiert und anschließend auf eine möglichst niedrige Temperatur rückgekühlt. Dies kann z.B. durch einen Flüssigbrennstoff gekühlten Wärmetauscher geschehen.
   In Abhängigkeit von den sich ergebenden thermischen Wirkungsgraden könnte die Kühlflüssigkeit prinzipiell durch einen Außenluftkühler auf eine sehr niedrige Temperatur gebracht werden.

Erfindungsgemäß ergeben sich somit folgende Vorteile:
- Es wird keine Kühlluft für die Brennkammerwandung benötigt.
- Die gesamte Brennkammerluft steht den Magervormischbrennern zur Verfügung.
- Die Emissionsgrenzwerte (ICAO) und die ACARE-Ziele lassen sich auch bei Triebwerken mit sehr hohen Wirkungsgraden (thermisch & Vortrieb) erreichen.
- Die Lebensdauer der Brennkammerwandungen kann erhöht werden.

Erfindungsgemäß ist es somit möglich, 100% der Gesamtverbrennungsluft in den Magervormischbrennern zu verwenden. Hierdurch werden die Verbrennungstemperaturen und die Bildung von NOx-Luftschadstoffen minimiert.

Die wassergekühlte Brennkammer wird bevorzugterweise aus gasdicht zusammengefügten Rohren hergestellt. Prinzipiell können alle flüssigen Medien als Kühlmittel verwendet werden.

Die Seite der Brennkammer, welche der Flamme zugewandt ist, wird bevorzugterweise glatt ausgeführt und kann bevorzugterweise mit einer keramischen Isolierung beschichtet werden. Durch die glatte Ausführung wird das Ansetzen von Ablagerungen reduziert.

Die Rohre der Brennkammerwandung, durch welche das Kühlmedium durchgeleitet wird, können entweder parallel zur Triebwerkslängsachse ausgerichtet sein oder unter einem Winkel hierzu, beispielsweise in einem Winkel bis 60°, angestellt werden.

Erfindungsgemäß ergibt sich somit eine gleichmäßige Wärmeaufnahme und eine geringe Temperaturschieflage zwischen benachbarten Rohren.

An den Eintrittsseiten und den Austrittsseiten werden bevorzugterweise Kühlwassersammler oder Kühlmittelsammler vorgesehen sein. Diese gewährleisten eine gleichmäßige Verteilung bzw. Aufnahme der Kühlwasserströme.

Bevorzugterweise ist weiterhin vorgesehen, dass der Kühlflüssigkeitsumlauf durch einen Pumpen gesteuerten Zwangsdurchlauf geregelt wird. Alternativ hierzu ist bei stationären Gasturbinen auch ein Naturumlaufverfahren vorstellbar, welches nur zum Anfahren durch einen Pumpen gesteuerten Zwangsdurchlauf geregelt wird.

Bei einer wassergekühlten Brennkammerwandung aus gasdichter Berohrung können die mechanischen Lasten durch die Brennkammerwandung aufgenommen werden.

Die Kühlluftkanäle zwischen Brennkammerwandung und CCIC einerseits und CCOC andererseits sind nicht mehr notwendig. Die schweren CCIC- und CCOC-Bauteile entfallen. Es wird Gewicht eingespart.

Vom Pre-Diffuser wird eine direkte gasdichte; trichterförmige Verbindung zu den Brennereinläufen hergestellt.

Die tragenden Strukturen im Pre-Diffuser, d.h. die Kompressor-Austrittsleitschaufeln (OGV) und die Trägerprofile (Struts) werden für den Wärmetauschprozess aktiviert. Die Verbrennungsluft wird mit der Wärme, die in der Brennkammerwandung aufgenommen wurde, vorgewärmt.

Die thermisch leicht expandierende Verbrennungsluft wird strömungsdynamisch stabilisiert. Der Druckverlust zwischen Kompressoraustritt und Brennkammereintritt wird reduziert.

Die gesamte Brennstoffzuführung liegt im kalten Bereich. Das komplexe Thermalsystem der Brennstoffzuführung und -kühlung ist nicht mehr notwendig. Die thermische Stabilität des Brennstoffs wird nicht kompromittiert. Die Verkokungsbildung und die Bildung von kleinen Verkokungskernen im zum Eindüsepunkt strömenden Brennstoff wird vermieden.

Für das Brennkammerdruckkörpergehäuse ergibt sich durch die Erfindung in vorteilhafter Ausgestaltung Folgendes: Die Flüssigkeitskühlung des Flammrohres macht es unnötig, Kühlluft an der Brennkammer vorbei (äußerer und innerer Annulus) entlangzuführen, um für die Kühlung der Flammrohrwandung zur Verfügung zu stehen. Prinzipiell benötigt man in diesem Fall nur noch eine Weiterleitung von Kühlluft für die Turbine (Statoren, hauptsächlich HP NGV1). Hierfür benötigt man allerdings den äußeren und inneren Annulus nicht mehr. Aus diesem Grund kann man das flüssigkeitsgekühlte Flammrohr konstruktiv mit dem inneren und dem äußeren Brennkammerdruckkörpergehäuse (CCIC & CCOC) vereinen und als Bauteil ausführen. Es wird ein integriertes Bauteil "Flammrohr-Druckkörpergehäuse" eingeführt.

Für den Pre-Diffuser ergibt sich erfindungsgemäß Folgendes: Sobald Flammrohr und Brennkammerdruckkörpergehäuse zu einem Bauteil integriert wurden, benötigt man den Raum zwischen Flammrohrkopf und Pre-Diffuser nicht mehr. Die Flammrohrkopf-Anströmverkleidung (Cowling) und der Pre-Diffuser (im herkömmlichen Begriff) entfallen. In der Regel wird der Druckverlust durch den Stoß (Dumploss) am Austritt des Pre-Diffusers erhöht. Dieser Verlust kann vermieden und zusätzlich kann eine Optimierung der Luftzuströmung vom Kompressor-Austritt zum Brennereintritt durch Neugestaltung des Anströmprinzips der Brenner erreicht werden. In diesem Fall wird einem Brenner eine feste Anzahl von OGVs (Kompressorauslass-Leitschaufeln) zugeordnet. Es wird ein (im Rundschnitt) Bauteil erstellt, welches einen konischen bzw. trichterförmigen Kanalverlauf von den OGVs direkt zu den Brenner-Lufteintritten aufweist. Brennereinlauf und Trichter-Anströmbauteil (einschließlich OGVs) können ab Kompressoraustritt als ein integriertes Bauteil ausgeführt werden. Es wird ein integriertes Bauteil "Kompressorauslass-Brennerantrömkanal" eingeführt.

Im Folgenden wird die Erfindung anhand eines Ausführungsbeispiels in Verbindung mit der Zeichnung beschrieben. Dabei zeigt:
- Fig. 1: eine schematische, stark vereinfachte Seitenansicht einer erfindungsgemäßen Gasturbinenbrennkammer,
- Fig. 2: eine Detailansicht der Anordnung der Verrohrung in einer ersten Variante,
- Fig. 3: eine Darstellung analog Fig. 2, einer weiteren Variante der Verrohrung,
- Fig. 4: eine schematische Darstellung eines Kühlkreislaufs und,
- Fig. 5: eine schematische Aufsicht auf den Pre-Diffuser und die Brennkammer in schematischer Darstellung.

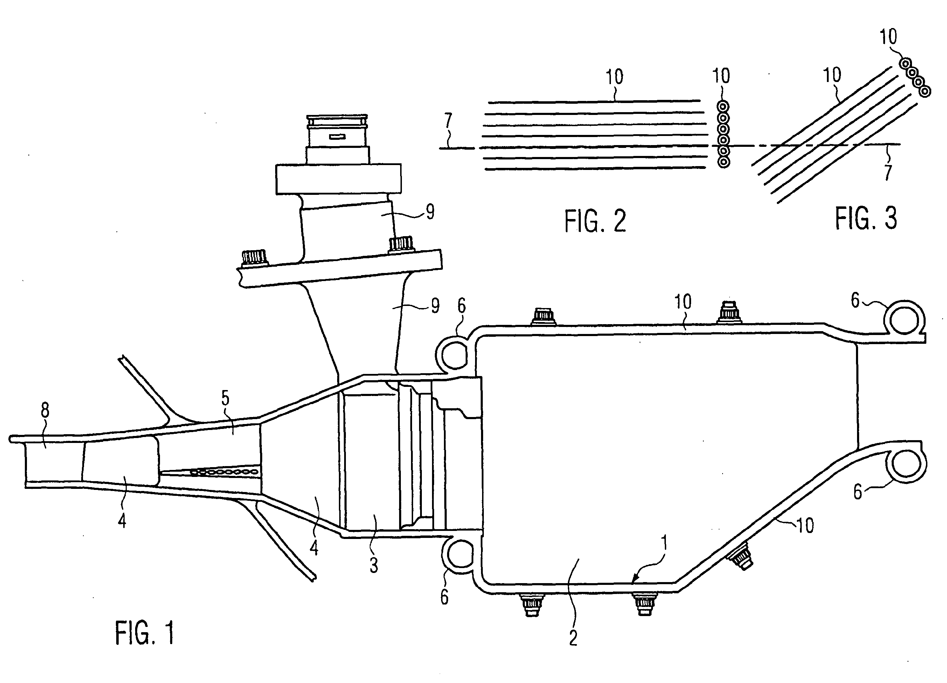

Die Fig. 1 zeigt in schematischer Weise eine erfindungsgemäß ausgestaltete Brennkammerwandung 1 einer Gasturbinenbrennkammer 2, beispielsweise einer Magerbrennkammer. Der Brennkammer 2 ist ein Magervormischbrenner 3 vorgeschaltet, welchem ein Pre-Diffuser 4 vorgeschaltet ist. In dem Pre-Diffuser 4 ist ein Wärmetauscher 5 zwischengeschaltet. Im Bereich der Brennkammerwandung 1 sind am Einlauf bzw. am Auslauf jeweils Kühlwassersammler 6 dargestellt, welche ringförmig oder kammerförmig ausgebildet sein können.

Die Brennkammerwandung 1 ist in Form einer Verrohrung ausgebildet, welche in den Figuren 1 und 2 jeweils, bezogen auf eine Gasturbinen-Achse 7, dargestellt ist. Aus Fig. 2 ergibt sich, dass die einzelnen Rohre, welche in der rechten Hälfte der Fig. 2 in der Schnittansicht, um 90° gedreht, gezeigt sind, parallel zueinander und parallel zur Achse 7 angeordnet sind, während die Fig. 3 eine entsprechende Anordnung in einem Winkel zeigt.

Wie aus Fig. 1 ersichtlich ist, können die Träger 9 für die Brennstoff-Versorgung wesentlich kleiner ausfallen, da lediglich die Zufuhr von Brennstoff erforderlich ist, nicht jedoch eine Beeinflussung der Luftströmung.

Stromauf des Pre-Diffusers 4 sind schematisch Leitschaufeln des Pre-Diffusers oder Kompressors mit dem Bezugszeichen 8 dargestellt. Diese dienen erfindungsgemäß zur Wärme-Einkopplung. Dem selben Zweck dient auch der Wärmetauscher 5, welcher ebenfalls zu einer Wärmerückkopplung in die anströmende Luft führt.

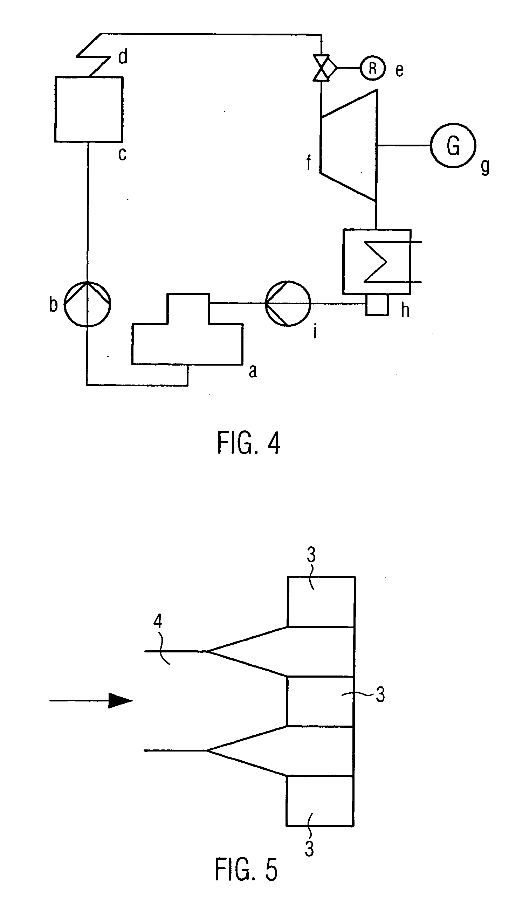

Die Fig. 4 zeigt in schematischer Darstellung einen einfachen Kraftwerksprozess (Zwangsdurchlauf), dessen Prinzip bei der erfindungsgemäßen Kühlung zugrunde gelegt werden kann. Dabei bedeutet:
- a: Speisewasserbehälter
- b: Speisepumpe
- c: Dampfkessel
- d: Überhitzer
- e: Regelventil
- f: Dampfturbine
- g: Generator
- h: Kondensator
- i: Kondensatpumpe

Im vorliegenden Fall ist der Dampfkessel dem Flammrohr (ohne Verdampfung) zuzuordnen, während der Verdampfer dem HP NGV1 entspricht. Der Überhitzer entspricht dabei den Laufschaufeln oder Leitschaufeln der Turbine.

Um eine sichere Kühlung der Brennkammer unter allen Flugzuständen zu erreichen, darf es in der Brennkammerberohrung abweichend vom realen Kraftwerksprozess nicht zur Verdampfung kommen. Da der Verdampfungspunkt abhängig von der Wärmeaufnahme, damit von der thermischen Brennkammerbelastung und dem Triebwerksschub ist, ist ein kontrolliertes Zurückfließen von flüssigen Wasserresten schwierig, vielleicht gar nicht realisierbar.

Deshalb wird die Austrittstemperatur durch den Kühlflüssigkeitsstrom geregelt. Die Regelung wirkt auf die Kreislaufpumpe. Danach kann man die Kühlflüssigkeit durch die HP NGV1-Statorreihe leiten, verdampfen und überhitzen. Die verdampfte Kühlflüssigkeit kann z.B. wie in DE 69213663 T2 oder ähnlich geführt werden.

(Die Überhitzung muss ggf. durch Wassereinspritzung geregelt werden, damit materialseitige Grenzen der Temperatur nicht überschritten werden.)

Eine so genannte Speisewasservorwärmung kann in Zusammenhang mit einem Zwischenkühler (Intercooler) erfolgen. Durch die niedrige Eintrittstemperatur wird ein solcher Zwischenkühler kleiner und leichter ausfallen als bei gegenwärtigen Ansätzen und die entnommene Wärme würde im Kreislauf genutzt werden.

Die Fig. 5 zeigt eine schematische Aufsicht auf den Pre-Diffuser 4 und die zugeordneten Magervormischbrenner 3. Wie durch den Pfeil dargestellt, erfolgt eine Luftströmung nur zu den Brennern, eine weitere Kühlluftströmung ist nicht erforderlich. Diese ergibt sich aus der Trichterkontur des Pre-Diffuser.

### Bezugszeichenliste

- 1: Brennkammerwandung
- 2: Brennkammer
- 3: Magervormischbrenner
- 4: Pre-Diffuser
- 5: Wärmetauscher
- 6: Kühlwassersammler
- 7: Achse
- 8: Leitschaufeln des Pre-Diffusers oder Kompressors
- 9: Träger/Stems für Brennstoff-Versorgung
- 10: Rippenrohr/Brennkammerberohrung

## Patentansprüche

1. Gasturbinenbrennkammeranordnung mit einer Brennkammerwandung (1), wobei zumindest ein Teil der Brennkammerwandung (1) mit einer Flüssigkeitskühlung versehen ist, welche ein Medium verwendet, welches bei atmosphärischen Normalbedingungen gasförmig oder flüssig ist, wobei eine gasdichte, berohrte Brennkammerwandung aus Rippenrohren (10) vorgesehen ist, **dadurch gekennzeichnet, dass** die berohrte Brennkammerwandung (1) auf der Flammenseite mit einem Wärmedämmmaterial versehen ist, dass ein Pre-Diffusergehäuse (4) mit Mitteln zur Wärmerückkopplung in die anströmende Luft versehen ist, wobei im Bereich des Pre-Diffusergehäuses (4) ein rekuperativer Wärmetauscher (5) zur Wärmerückkopplung in die anströmende Luft angeordnet ist, durch welchen die in der Brennkammerberohrung (10) aufgenommene Wärmeenergie an die Verbrennungsluft übertragen wird, wobei die Flüssigkeitskühlung einen geschlossenen Kühlkreislauf umfasst.

2. Gasturbinenbrennkammeranordnung nach Anspruch 1, **dadurch gekennzeichnet, dass** die Brennkammerwandung (1) aus Rippenrohren (10) auf der Flammenseite mit einer glatten Oberfläche ausgebildet ist.

3. Gasturbinenbrennkammeranordnung nach Anspruch 1, **dadurch gekennzeichnet, dass** die Brennkammerwandung (1) aus Rippenrohren auf der Flammenseite mit einer welligen Oberfläche ausgebildet ist.

4. Gasturbinenbrennkammeranordnung nach einem der Ansprüche 1 bis 3, **dadurch gekennzeichnet, dass** die Rippenrohre (10) parallel zur Achse (7) der Brennkammer (2) angeordnet sind.

5. Gasturbinenbrennkammeranordnung nach einem der Ansprüche 1 bis 3, **dadurch gekennzeichnet, dass** die Rippenrohre (10) in einem Winkel zur Achse (7) der Brennkammer (2) angeordnet sind.

6. Gasturbinenbrennkammeranordnung nach einem der Ansprüche 1 bis 5, **dadurch gekennzeichnet, dass** zumindest ein Kühlfluidsammler (6) vorgesehen ist, welcher mit den Rippenrohren (10) verbunden ist.

7. Gasturbinenbrennkammeranordnung nach einem der Ansprüche 1 bis 6, **dadurch gekennzeichnet, dass** stromauf des Pre-Diffusergehäuses (4) Leitschaufeln (8) angeordnet sind, welche mit Mitteln zur Wärmerückkopplung in die anströmende Luft versehen sind.

8. Gasturbinenbrennkammeranordnung nach einem der Ansprüche 1 bis 7, **dadurch gekennzeichnet, dass** ein Brennstoffversorgungsschacht (9) für einen Magervormischbrenner (3) der Brennkammer (2) außerhalb der Verbrennungsluftanströmung angeordnet ist.

## Claims

1. Gas-turbine combustion chamber with a combustion chamber wall (1), with at least part of the combustion chamber wall (1) being provided with a liquid-cooling system using a fluid which is gaseous or liquid under atmospheric standard conditions, with a gas-tight, tubed combustion chamber wall of finned tubes (10) being provided, **characterized in that** the tubed combustion chamber wall (1) is provided with a heat-insulating material on the flame side, that a pre-diffusor casing (4) is provided with means for recoupling heat into the inflowing air, with a recuperative heat exchanger (5) for recoupling heat into the inflowing air being arranged in the area of the pre-diffusor casing (4), by which heat energy absorbed in the combustion chamber tubing (10) is transferred to the combustion air, with the liquid-cooling system including a closed cooling circuit.

2. Gas-turbine combustion chamber in accordance with Claim 1, **characterized in that** the combustion chamber wall (1) of finned tubes (10) is given a smooth surface on the flame side.

3. Gas-turbine combustion chamber in accordance with Claim 1, **characterized in that** the combustion chamber wall (1) of finned tubes is given a wavy surface on the flame side.

4. Gas-turbine combustion chamber in accordance with one of the Claims 1 to 3, **characterized in that** the finned tubes (10) are parallel to the axis (7) of the combustion chamber (2).

5. Gas-turbine combustion chamber in accordance with one of the Claims 1 to 3, **characterized in that** the finned tubes (10) are inclined at a certain angle to the axis (7) of the combustion chamber (2).

6. Gas-turbine combustion chamber in accordance with one of the Claims 1 to 5, **characterized in that** at least one cooling fluid accumulator (6) is provided, which is connected to the finned tubes (10).

7. Gas-turbine combustion chamber in accordance with one of the Claims 1 to 6, **characterized in that** guide vanes (8) are arranged upstream of the pre-diffusor casing (4), which are provided with means for recoupling heat into the inflowing air.

8. Gas-turbine combustion chamber in accordance with one of the Claims 1 to 7, **characterized in that** a fuel supply shaft (9) for the lean premix burner (3) of the combustion chamber (2) is arranged outside the combustion air inflow.

## Revendications

1. Chambre de combustion d'une turbine à gaz, avec une paroi de chambre de combustion (1), sachant qu'au moins une partie de la paroi de chambre de combustion (1) est munie d'un système de refroidissement par liquide utilisant un fluide qui est gazeux ou liquide dans des conditions atmosphériques normales, qu'est prévue une paroi de chambre de combustion étanche au gaz constituée de tubes à ailettes (10), **caractérisée en ce que**, du côté de la flamme, la paroi de chambre de combustion (1) garnie de tubes est munie d'un matériau calorifuge, qu'est prévu un carter de prédiffuseur (4) avec des moyens de réinjection de la chaleur dans le flux d'air soufflé, sachant que dans la zone du carter de prédiffuseur (4) est placé un échangeur de chaleur récupérateur (5) pour réinjecter la chaleur dans le flux d'air soufflé et au moyen duquel l'énergie thermique absorbée dans les tubes de la chambre de combustion (10) est transmise à l'air de combustion, le système de refroidissement par liquide comprenant un circuit de refroidissement fermé.

2. Chambre de combustion d'une turbine à gaz selon la revendication n° 1, **caractérisée en ce que** la paroi de chambre de combustion (1) constituée de tubes à ailettes (10) est conçue avec une surface lisse du côté de la flamme.

3. Chambre de combustion d'une turbine à gaz selon la revendication n° 1, **caractérisée en ce que** la paroi de chambre de combustion (1) constituée de tubes à ailettes est conçue avec une surface ondulée du côté de la flamme.

4. Chambre de combustion d'une turbine à gaz selon une des revendications n° 1 à n° 3, **caractérisée en ce que** les tubes à ailettes (10) sont parallèles à l'axe (7) de la chambre de combustion (2).

5. Chambre de combustion d'une turbine à gaz selon une des revendications n° 1 à n° 3, **caractérisée en ce que** les tubes à ailettes (10) sont disposés selon un angle par rapport à l'axe (7) de la chambre de combustion (2).

6. Chambre de combustion d'une turbine à gaz selon une des revendications n° 1 à n° 5, **caractérisée en ce qu'**est prévu au moins un collecteur de fluide de refroidissement (6) qui est relié aux tubes à ailettes (10).

7. Chambre de combustion d'une turbine à gaz selon une des revendications n° 1 à n° 6, **caractérisée en ce qu'**en amont du carter de prédiffuseur (4) sont disposées des aubes fixes (8) munies de moyens de réinjection de la chaleur dans le flux d'air soufflé.

8. Chambre de combustion d'une turbine à gaz selon une des revendications n° 1 à n° 7, **caractérisée en ce qu'**une gaine d'alimentation en carburant (9) pour un brûleur à prémélange pauvre (3) de la chambre de combustion (2) est disposée hors du courant d'air de combustion.
